# EUROPÄISCHE PATENTSCHRIFT

(11) **EP 4 001 186 B1**
(45) Veröffentlichungstag und Bekanntmachung des Hinweises auf die Patenterteilung: **22.05.2024**
(21) Anmeldenummer: 21201841.0
(22) Anmeldetag: 11.10.2021
(51) Int. Cl.: B65G 45/00, B65G 53/52, F16K 27/00, F16K 27/04, F16K 3/00

(54) **ABSPERRSCHIEBER FÜR EINE FÖRDERLEITUNG IN EINER ANLAGE ZUR HERSTELLUNG UND/ODER VERARBEITUNG VON SCHÜTTGUT**
GATE VALVE FOR A FEED LINE IN A PLANT FOR THE PRODUCTION AND / OR PROCESSING OF BULK MATERIAL
VANNE D'ARRÊT POUR UNE CONDUITE DE TRANSPORT DANS UNE INSTALLATION DE FABRICATION ET/OU DE TRAITEMENT DE MATIÈRES EN VRAC

(30) Priorität: 24.11.2020 DE 102020214714
(43) Veröffentlichungstag der Anmeldung: 25.05.2022
(73) Patentinhaber: Coperion GmbH, 70469 Stuttgart (DE)
(72) Erfinder: Frick, Simon, 88364 Wolfegg (DE); Sprung, Jochen, 88214 Ravensburg (DE); Walter, Michael, 88348 Bad Saulgau (DE); Zinser, Bruno, 88289 Waldburg (DE); Schöllhorn, Thomas, 88410 Bad Wurzach Hauerz (DE)
(74) Vertreter: Rau, Schneck & Hübner Patentanwälte Rechtsanwälte PartGmbB

(56) Entgegenhaltungen:
- EP-A2- 2 917 618
- DE-A1- 4 414 115
- DE-A1-102015 110 113
- US-A- 5 449 146
- US-A- 5 938 175
- US-A1- 2007 181 841

## Beschreibung

Die Erfindung betrifft einen Absperrschieber für eine Förderleitung in einer Anlage zur Herstellung und/oder Verarbeitung von Schüttgut.

NL 80 00 046 A offenbart einen Absperrschieber für eine Rohrleitung, bei dem ein Schieberblatt mittels eines Hydraulikzylinders zum Absperren der Rohrleitung betätigt werden kann. Das Schieberblatt ist in einem Gehäuse mittels kompressierbarer Ringmanschetten abdichtbar. Dazu werden die ringförmigen Manschetten seitlich mittels einer Spannschraube verpresst. Die Abdichtung des Schieberblatts mit den punktförmig verpressten, ringförmigen Manschetten ist unzuverlässig. Es besteht das Risiko eines unkontrollierten und unbeabsichtigten Austritts von Schüttgut durch den Absperrschieber.

US 3,194,259 offenbart einen Schieber für Flüssigkeitsleitungen.

DE 881 593 B offenbart einen Absperrschieber für Rohrleitungen kleiner Durchmesser.

US 3,658,087 offenbart einen Absperrschieber für Flüssigkeitsleitungen.

US 4,221,307 offenbart einen Schieber für pneumatische Förderleitungen.

DE 966 051 B offenbart einen Absperrschieber für Gasleitungen.

US 2006/0 175 572 A1 offenbart einen Absperrschieber für Flüssigkeitsleitungen.

US 5,938,175, welches die im Oberbegriff von Anspruch 1 genannten Merkmale aufweist, sowie US 2007/0181841 A1, DE 10 2015 110 113 A1, WO 2014/072420 A2, US 5,449,146 und DE 44 14 115 A1 offenbaren jeweils einen Absperrschieber für Schüttgut.

US 1,500,908 und US 2,031 151 offenbaren jeweils ein Absperrventil mit einem keilförmigen Schieberblatt.

Es ist eine Aufgabe der vorliegenden Erfindung, einen Absperrschieber für eine Förderleitung von Schüttgut bereitzustellen, der insbesondere unkompliziert in der Handhabung ist, insbesondere unkompliziert zu reinigen ist und insbesondere eine zuverlässige Abdichtung des Schieberblatts gewährleistet.

Die Aufgabe ist erfindungsgemäß gelöst durch einen Absperrschieber mit den im Anspruch 1 angegebenen Merkmalen.

Erfindungsgemäß wurde erkannt, dass die Abdichtung eines Schieberblatts in einem Absperrschieber durch jeweils eine Dichtplatte verbessert ist. Die Dichtplatte dichtet das Schieberblatt gegenüber einer Zuführöffnung und einer Abführöffnung an einem Gehäuse des Absperrschiebers ab. Die Zuführöffnung dient zum Zuführen von Schüttgut in das Gehäuse. Die Abführöffnung dient zum Abführen von Schüttgut aus dem Gehäuse. Die Abführöffnung ist insbesondere gegenüberliegend zu der Zuführöffnung am Gehäuse angeordnet. Insbesondere sind die Zuführöffnung und die Abführöffnung konzentrisch zur Strömungsrichtung angeordnet. Das Gehäuse ist insbesondere quaderförmig ausgeführt. Die Dichtplatten ermöglichen eine flächige Anpressung an das Schieberblatt. Die Dichtplatten ermöglichen eine flächige Abdichtung des Schieberblatts. Die Dichtplatten sind insbesondere jeweils einteilig ausgeführt. Insbesondere ist es entbehrlich, an der Dichtplatte ein separates Dichtungselement anzuordnen und/oder daran zu befestigen. Der Aufbau und die Konstruktion der Dichtplatten sind vereinfacht. Die Dichtplatten sind robust ausgeführt. Dadurch ist die Zuverlässigkeit der erzielbaren Dichtwirkung erhöht. Die Dichtwirkung, die mit den Dichtplatten erzeugt wird, ist insbesondere gegenüber einer linienförmigen Abdichtung mittels einer ringförmigen Dichtung gemäß dem Stand der Technik verbessert. Die Dichtplatte ist insbesondere aus einem nicht-metallischen Material und insbesondere aus einem Kunststoffmaterial hergestellt, das insbesondere Dichteigenschaften aufweist, insbesondere aus einem thermoplastischen Kunststoff, insbesondere Polytetrafluorethylen (PTFE), Polyoxymethylen (POM) und/oder Polyamid (PA, PA6). Alternativ kann die Dichtplatte aus einem elastomeren Kunststoffmaterial hergestellt sein, wie beispielsweise Silikon, Fluorkautschuk (FKM, FPM) oder Ethylen-Propylen-Dien-Kautschuk (EPDM). Die Dichtplatte ist insbesondere aus einem Kunststoffmaterial hergestellt, das eine Shore-Härte von mindestens D 60, insbesondere von mindestens D 70 und insbesondere bis zu D 100 aufweist. Bei der Verwendung von elastomeren Kunststoffen kann die Shore-Härte zwischen D 30 und D 50 liegen.

Das Schieberblatt ist insbesondere im Gehäuse angeordnet und im Gehäuse verlagerbar. Das Schieberblatt ist zwischen einer Durchflussstellung und einer Absperrstellung entlang einer Längsachse des Gehäuses verlagerbar. In der Durchflussstellung des Schieberblatts ist eine Schüttgutströmung durch den Absperrschieber ermöglicht. In der Durchflussstellung ist die Zuführöffnung mit der Abführöffnung für die Schüttgutströmung verbunden. Durch die Zuführöffnung und die Abführöffnung wird eine Strömungsrichtung des Schüttguts durch den Absperrschieber vorgegeben. Das Schieberblatt weist eine Öffnung auf, die insbesondere rund ausgeführt ist. In der Durchflussstellung ist die Öffnung des Schieberblatts zumindest bereichsweise überlappend, insbesondere vollständig überlappend und insbesondere konzentrisch, mit der Zuführöffnung und der Abführöffnung angeordnet. Insbesondere ist die Fläche der Öffnung des Schieberblatts identisch mit der Fläche der Zuführöffnung und mit der Fläche der Abführöffnung. Entlang der Schüttgutströmungsrichtung sind keine Rücksprünge vorgesehen, an welchen das Schüttgut sich ablagern könnte.

Es ist alternativ möglich, dass die Fläche der Zuführöffnung kleiner ist als die Fläche der Abführöffnung. Das Schüttgut wird hin zu einer größeren Querschnittsfläche gefördert. Daraus ergeben sich verbesserte Förderbedingungen. Rücksprünge sind vermieden.

In der Absperrstellung ist die Zuführöffnung von der Abführöffnung durch das Schieberblatt getrennt. Eine Schüttgutströmung entlang der Strömungsrichtung ist dadurch verhindert. Insbesondere ist die Öffnung des Schieberblatts nicht fluchtend mit der Zuführöffnung und der Abführöffnung angeordnet.

Zur Verlagerung des Schieberblatts zwischen der Durchflussstellung und der Absperrstellung dient insbesondere ein erster Verlagerungsantrieb. Der erste Verlagerungsantrieb ist insbesondere ein Linearantrieb. Der erste Verlagerungsantrieb ist insbesondere ein pneumatisch betriebener Antrieb. Es ist aber auch möglich, dass der erste Verlagerungsantrieb hydraulisch, magnetisch oder elektromotorisch angetrieben ist.

Der erste Verlagerungsantrieb kann auch als Handantrieb ausgeführt sein, beispielsweise mit einem manuell betätigbaren Spindelantrieb.

Das Gehäuse weist eine Gehäuseöffnung auf. An dem Gehäuse ist ein Gehäusedeckel lösbar befestigt, um die Gehäuseöffnung im Betrieb des Absperrschiebers zu verschließen. Durch Öffnen des Gehäusedeckels ist ein Innenraum des Gehäuses unkompliziert zugänglich. Dadurch ist es möglich, zumindest das Schieberblatt zumindest teilweise aus dem Gehäuse zu verlagern. Insbesondere ist es möglich, das Schieberblatt und/oder die Dichtplatten vollständig aus dem Gehäuse zu entnehmen. Dadurch ist eine unkomplizierte und zuverlässige Reinigung des Absperrschiebers gewährleistet. Insbesondere ist das Schieberblatt lösbar mit dem ersten Verlagerungsantrieb gekoppelt, so dass das Schieberblatt aus dem Gehäuse entnehmbar ist, ohne dass der erste Verlagerungsantrieb demontiert werden muss. Der erfindungsgemäße Absperrschieber gewährleistet ein hygienisches Design sowie eine unkomplizierte und schnelle Zerlegbarkeit.

Das Gehäuse kann ein oder mehrere Gussteile umfassen. Beispielsweise können ein Zuführflansch und/oder ein Abführflansch einteilig an dem Gehäuse, insbesondere an einem Deckelelement und/oder Bodenelement angegossen sein. Zusätzlich können Seitenwände des Gehäuses einteilig angegossen sein. Es ist insbesondere denkbar, das Gehäuse im Wesentlichen einteilig als Gussteil auszuführen, wobei insbesondere eine seitliche Öffnung, die mittels des Gehäusedeckels verschließbar sein kann, offen bleibt.

Der erfindungsgemäße Absperrschieber ermöglicht also einerseits einen freien Durchgang bei der Förderung von Schüttgut und gewährleistet andererseits eine zuverlässige Abdichtung des Schieberblatts in der Absperrstellung. Darüber hinaus ist der erfindungsgemäße Absperrschieber unkompliziert und zuverlässig reinigbar. Der erfindungsgemäße Absperrschieber ist insbesondere für die Förderung von Schüttgut aus dem Bereich der Lebensmittel-, Hygiene-, Pharma- und/oder Kunststoffindustrie geeignet, bei welchen besondere Anforderungen an die Hygiene und/oder die Reinigbarkeit der Förderleitungen und der darin verbauten Komponenten gelten. Schüttgüter aus der Lebensmittelindustrie sind Nahrungsmittel, insbesondere für Säuglinge, oder Milchpulver. Schüttgut aus der Kunststoffindustrie ist insbesondere Kunststoffgranulat und/oder -pulver, insbesondere aus Polyolefin, insbesondere aus Polypropylen oder Polyethylen. Schüttgut aus der Pharmaindustrie sind insbesondere Pharmavorprodukte.

Insbesondere ist es möglich, den erfindungsgemäßen Absperrschieber im eingebauten Zustand in der Förderleitung zu reinigen. Der Absperrschieber selbst muss zur Reinigung nicht von der Förderleitung getrennt werden.

Gegenüber einer Absperrklappe weist der Absperrschieber den Vorteil auf, dass ein freier Durchgang existiert. Unerwünschte Produktablagerungen an der Absperrklappe sind dadurch vermieden.

Als Schüttgut wird Pulver und/oder Granulat verstanden. Das Pulver kann eine mittlere Korngröße zwischen 1 µm und 2000 µm, insbesondere zwischen 10 µm und 2000 µm, insbesondere zwischen 50 µm und 2000 µm, insbesondere zwischen 150 µm und 1800 µm und insbesondere zwischen 300 µm und 1500 µm aufweisen. Das Granulat kann eine mittlere Korngröße von 1500 µm bis 6000 µm, insbesondere von 1800 µm bis 5000 µm und insbesondere von 2000 µm bis 4000 µm aufweisen.

Bei dem Absperrschieber ist die Zerlegbarkeit verbessert. Die Gehäuseöffnung ist seitlich am Gehäuse angebracht und weist eine Flächennormale auf, die quer und insbesondere senkrecht zu der Strömungsrichtung des Schüttguts orientiert ist. Die Zugänglichkeit des Schieberblatts und der Dichtplatten ist verbessert.

Eine Ausführung des Schieberblatts gemäß Anspruch 3 ermöglicht eine robuste und zuverlässige Absperrung. Insbesondere ist die Verlagerung des Schieberblatts zwischen der Durchflussstellung und der Absperrstellung vereinfacht.

Eine Ausführung des Schieberblatts gemäß Anspruch 4 reduziert den Fertigungsaufwand. Das Schieberblatt weist eine konstante Plattendicke auf.

Eine Verstelleinheit gemäß Anspruch 5 ermöglicht eine gezielte, insbesondere aktive, und zuverlässige Verstellung eines Abstands der Zuführöffnung von der Abführöffnung. Der Abstand ist entlang der Strömungsrichtung orientiert. Das Gehäuse ist insbesondere mehrteilig ausgeführt und ermöglicht eine Verlagerung einer ersten, insbesondere oberen, Seitenwand gegenüber einer zweiten, insbesondere unteren, Seitenwand. Die Verstelleinheit umfasst mindestens eine, insbesondere mehrere, insbesondere mindestens drei und insbesondere mindestens vier Spanneinheiten, insbesondere Gewindespindeln. Die Gewindespindeln weisen jeweils ein Bewegungsgewinde auf, das jeweils mit einem Gewindeeinsatz in einer der Seitenwände korrespondiert. Durch Betätigung der Gewindespindeln ist der Abstand zwischen den Seitenwänden gezielt veränderlich festlegbar. Dadurch wird es einerseits ermöglicht, eine definierte Anpressung der Dichtplatten an das Schieberblatt zu gewährleisten. Andererseits können die Seitenwände gezielt voneinander beabstandet werden, insbesondere dann, wenn zu Reinigungszwecken das Schieberblatt aus dem Gehäuse entfernt werden soll.

Ein Dichtungselement gemäß Anspruch 6 gewährleistet eine zuverlässige Abdichtung des Gehäuses bei der Verstellung der Seitenwände zueinander. Das Dichtungselement ist insbesondere an einer Außenseite des Gehäuses angeordnet. Das Dichtungselement dient zum Abdichten der Zuführöffnung und/oder der Abführöffnung. Insbesondere ist das Dichtungselement am Übergang einer Außenseite des Gehäuses zu einem Verbindungsflansch angeordnet. Das Dichtungselement ist insbesondere ringförmig ausgeführt und kompressibel. Das Dichtungselement ist insbesondere geeignet, einen mittels der Verstelleinheit veränderlich festlegbar Verschiebeweg von mindestens 1 mm, insbesondere von mindestens 2 mm, insbesondere von mindestens 3 mm und insbesondere von mindestens 5 mm zu ermöglichen. Das Dichtungselement ist ein Pufferelement entlang der Strömungsrichtung des Absperrschiebers.

Ein Schieberblatt gemäß Anspruch 7 ermöglicht eine vereinfachte Demontage zu Reinigungszwecken. Das Schieberblatt weist eine veränderliche Plattendicke auf und ist insbesondere keilförmig ausgeführt. Die Keilform ist entlang der Flächennormalen der Gehäuseöffnung orientiert, wobei die Plattendicke des Schieberblatts zu der Gehäuseöffnung hin ansteigt. Entlang der Längsachse ist die Plattendicke des Schieberblatts konstant. Durch die Keilform des Schieberblatts ist eine Entnahmeschräge gegeben, so dass das Schieberblatt durch die Gehäuseöffnung vereinfacht entnommen werden kann. Die Keilform ist insbesondere derart ausgeführt, dass die Neigung an einer Oberseite und einer Unterseite des Schieberblatts jeweils identisch ist. Die Neigung an Oberseite und Unterseite kann auch unterschiedlich ausgeführt sein. Es ist insbesondere auch denkbar, dass das Schieberblatt einseitig trapezförmig ausgeführt ist, also nur an der Oberseite oder nur an der Unterseite eine Neigung aufweist.

Ein Gehäuse gemäß Anspruch 8 ist unkompliziert und robust ausgeführt. Eine Verstellbarkeit der Seitenwände zueinander ist entbehrlich. Das Gehäuse ist insbesondere einteilig ausgeführt. Einteilig bedeutet insbesondere, dass zwei einander gegenüberliegend angeordnete Seitenwände, insbesondere die erste Seitenwand und die zweite Seitenwand, unlösbar miteinander verbunden sind. Die beiden Seitenwände können nicht zerstörungsfrei voneinander getrennt werden. Insbesondere ist das Gehäuse mit den beiden Seitenwänden aus einem Stück hergestellt, insbesondere durch Umformen oder Urformen. Es ist alternativ denkbar, dass die Seitenwände stoffschlüssig miteinander verbunden sind, insbesondere durch Schweißen, Löten oder Kleben. Einteilig kann aber auch bedeuten, dass der Gehäusedeckel mit dem Gehäuse lösbar verbindbar ist. Wesentlich ist, dass der Abstand zwischen der ersten Seitenwand und der zweiten Seitenwand entlang der Strömungsrichtung konstant, insbesondere unveränderlich, ist.

Ein Auswurfelement gemäß Anspruch 9 vereinfacht das Auswerfen mindestens einer Dichtplatte und/oder des Schieberblatts aus dem Gehäuse. Das Auswurfelement kann als Gewindestift oder Gewindespindel ausgeführt sein, das in einer Gewindebohrung im Gehäuse angeordnet ist. Die Gewindebohrung ist am Gehäuse insbesondere der Gehäuseöffnung gegenüberliegend angeordnet. Das Auswurfelement dient insbesondere zum Herausschieben oder Herausdrücken der mindestens einen Dichtplatte und/oder des Schieberblatts aus dem Gehäuse. Das Auswurfelement kann auch als Stift mit Exzenterbetätigung ausgeführt sein. Zum vereinfachten Entnehmen der Dichtplatten aus dem Gehäuse können diese jeweils eine Entnahmetasche aufweisen.

Zusätzlich oder alternativ kann ein Auswurfelement auch als Zugelement ausgeführt sein. Beispielsweise kann die mindestens eine Dichtplatte und/oder das mindestens eine Schieberblatt eine Zugöffnung aufweisen, in die das als Zugelement ausgeführte Auswurfelement eingreifen kann. In diesem Fall dient das Auswurfelement zum Herausziehen der mindestens einen Dichtplatte und/oder des Schieberblatts aus dem Gehäuse. Die Zugöffnung ist insbesondere als Gewindebohrung in der mindestens einen Dichtplatte und/oder dem Schieberblatt ausgeführt. In die Gewindebohrung kann ein Gewindestift, insbesondere eine Schraube, eingeschraubt und damit die mindestens eine Dichtplatte und/oder das Schieberblatt aus dem Gehäuse herausgezogen werden. Alternativ kann die Zugöffnung mit einem Hinterschnittelement, insbesondere als Lasche, ausgeführt sein, um die mindestens eine Dichtplatte und/oder das Schieberblatt manuell und/oder mittels eines geeigneten Werkzeugs, insbesondere eines hakenförmigen Werkzeugs, aus dem Gehäuse herauszuziehen.

Halteelemente gemäß Anspruch 10 gewährleisten eine zuverlässige Positionierung der Dichtplatten im Gehäuse entlang der Längsachse. Die Halteelemente sind insbesondere als Bolzen oder Stifte ausgeführt, die jeweils an einer dem Innenraum des Gehäuses zugewandten Innenseiten der Seitenwände angeordnet sind. Die Halteelemente sind insbesondere an den Innenseiten der Seitenwände eingeschraubt. Die Halteelemente können auch als Halteleisten ausgeführt sein, die beispielsweise in eine dafür vorgesehene Nut eingeschoben sind.

Separate Dichtplatten gemäß Anspruch 11 vereinfachen die Entnahme aus dem Gehäuse.

Führungsleisten an den Dichtplatten gemäß Anspruch 12 ermöglichen eine verbesserte, insbesondere integrierte, Führung des Schieberblatts entlang der Längsachse.

Ein zweiter Verlagerungsantrieb zum Verlagern des Schieberblatts in eine Reinigungsstellung gemäß Anspruch 13 ermöglicht eine Reinigung des Absperrschiebers ohne ein Öffnen des Gehäuses. Dadurch ist ein Absperrschieber geschaffen, der gereinigt werden kann, ohne demontiert werden zu können. Ein derartiger Absperrschieber ermöglicht eine sogenannte Clean-In-Place (CIP) Reinigung. Eine CIP-Reinigung mit Reinigungsflüssigkeit ist automatisierbar durchführbar. Insbesondere für Anwendungen im Bereich der Lebensmittel- und Hygieneindustrie ist die CIP-Reinigung von Vorteil. Die Verlagerung des Schieberblatts in die Reinigungsstellung erfolgt entlang einer Verlagerungsrichtung, die quer, insbesondere senkrecht, zur Längsachse orientiert ist. Insbesondere ist die Verlagerungsrichtung parallel zur Flächennormalen der Gehäuseöffnung orientiert. Die Verlagerungsrichtung des zweiten Verlagerungsantriebs und die Längsachse des Gehäuses definieren insbesondere eine Ebene, die parallel zu dem Schieberblatt orientiert ist. Durch das Verlagern des Schieberblatts entsteht ein umfänglicher Spalt um das Schieberblatt, so dass eine Reinigung sämtlicher Oberflächen möglich ist, ohne dass dazu der Absperrschieber zerlegt werden muss.

Der zweite Verlagerungsantrieb dient insbesondere zum Auswerfen des Schieberblatts. Der zweite Verlagerungsantrieb stellt insbesondere ein Auswurfelement in einer besonderen Ausgestaltung dar.

Der zweite Verlagerungsantrieb ist insbesondere pneumatisch betrieben. Der zweite Verlagerungsantrieb kann aber auch hydraulisch, magnetisch oder elektromotorisch angetrieben sein. Der zweite Verlagerungsantrieb ist insbesondere ein Linearantrieb.

Der zweite Verlagerungsantrieb kann wie der erste Verlagerungsantrieb als Handantrieb ausgeführt sein.

Eine Dichtkassette gemäß Anspruch 14, in der die Dichtplatten integriert angeordnet sind, gewährleistet eine zuverlässige Abdichtung des Schieberblatts bei einer Betätigung mit dem zweiten Verlagerungsantrieb.

Eine Drainageöffnung gemäß Anspruch 15 ermöglicht das, insbesondere selbsttätige, Abfließen der Reinigungsflüssigkeit aus dem Absperrschieber. Die Drainageöffnung ist insbesondere an der Dichtkassette, insbesondere an deren Unterseite, angeordnet und insbesondere darin integriert.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine perspektivische Darstellung eines Absperrschiebers gemäß einem ersten Ausführungsbeispiel ohne Gehäusedeckel,
- Fig. 2: eine geschnittene Seitenansicht des Absperrschiebers gemäß Fig. 1,
- Fig. 3: ein Längsschnitt gemäß Schnittlinie III-III in Fig. 1,
- Fig. 4: eine vergrößerte Detailansicht einer Verstelleinheit des Absperrschiebers gemäß Anspruch 1 in einer ersten Verstellanordnung,
- Fig. 5: eine Fig. 4 entsprechende Darstellung der Verstelleinheit in einer zweiten Verstellanordnung,
- Fig. 6: eine Längsschnittdarstellung des Absperrschiebers mit einem Auswurfelement,
- Fig. 7: eine perspektivische Explosionsdarstellung des Absperrschiebers mit entnommenen Dichtplatten und entnommenem Schieberblatt,
- Fig. 8: eine Seitenansicht in das geöffnete Gehäuse des Absperrschiebers bei entnommenem Schieberblatt und entnommenen Dichtplatten,
- Fig. 9: eine Fig. 1 entsprechende Ansicht eines Absperrschiebers gemäß einem zweiten Ausführungsbeispiel mit einem keilförmigen Schieberblatt,
- Fig. 10: eine Fig. 6 entsprechende Darstellung des Absperrschiebers gemäß Fig. 9,
- Fig. 11: eine Draufsicht eines Absperrschiebers gemäß einem dritten Ausführungsbeispiel mit einem zweiten Verstellantrieb,
- Fig. 12: eine Fig. 6 entsprechende Schnittdarstellung des Absperrschiebers gemäß Fig. 11,
- Fig. 13: eine vergrößerte Längsschnittdarstellung gemäß Schnittlinie XIII-XIII in Fig. 11,
- Fig. 14: eine vergrößerte schematische Darstellung des Details XIV in Fig. 12,
- Fig. 15: eine vergrößerte schematische Darstellung des Details XV in Fig. 12.

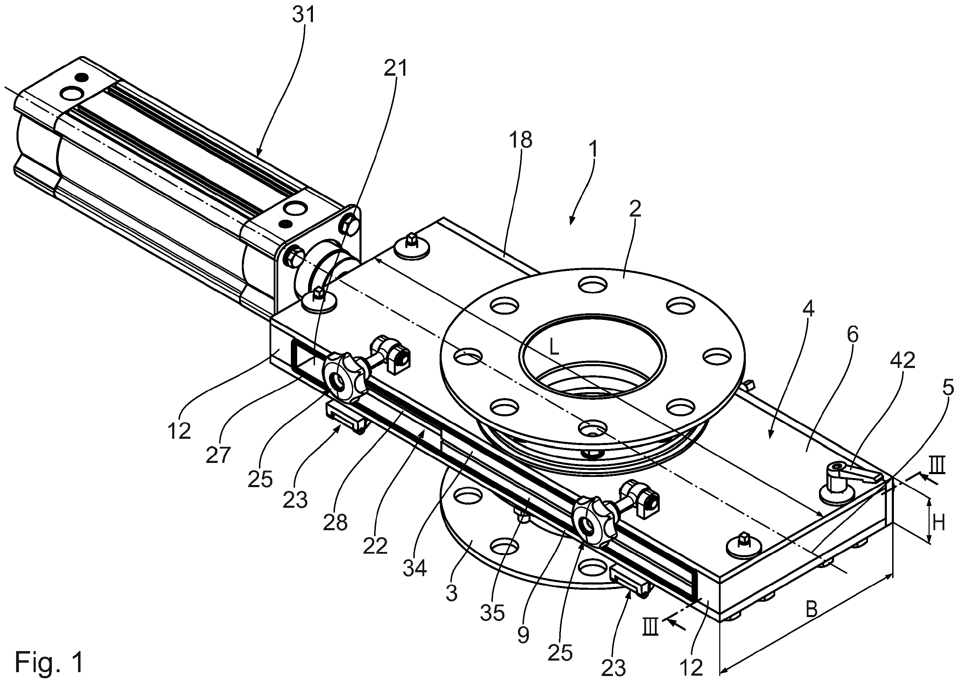

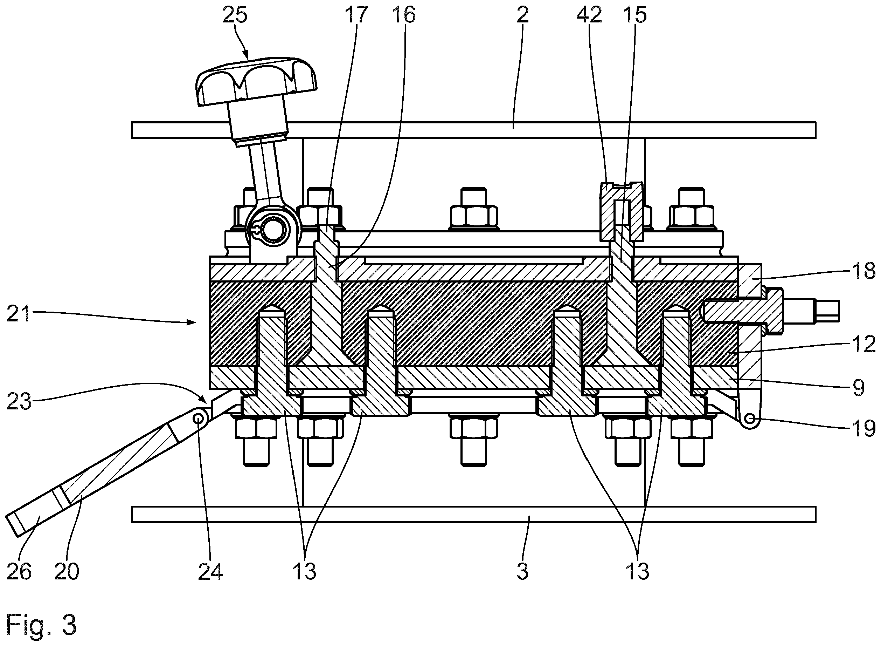

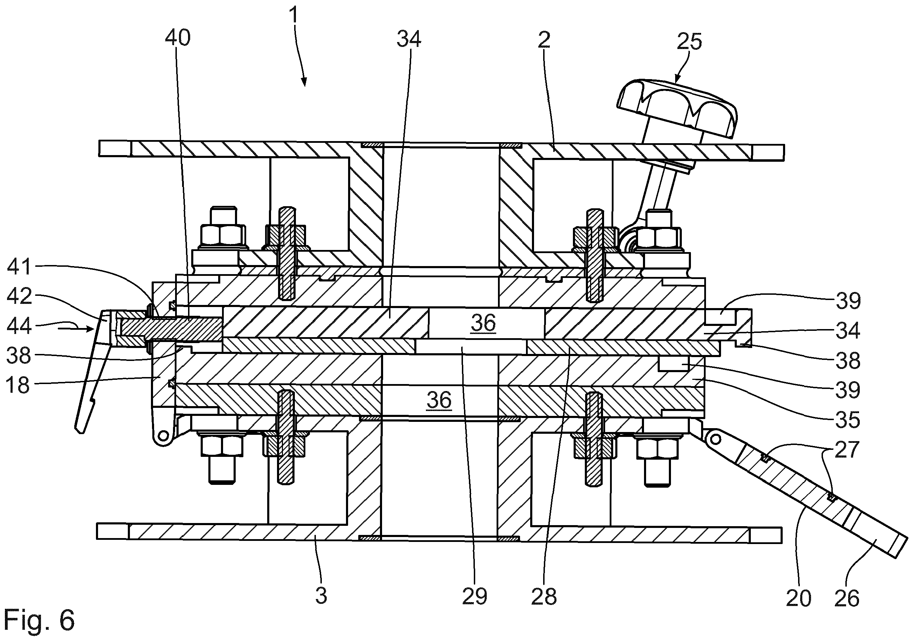

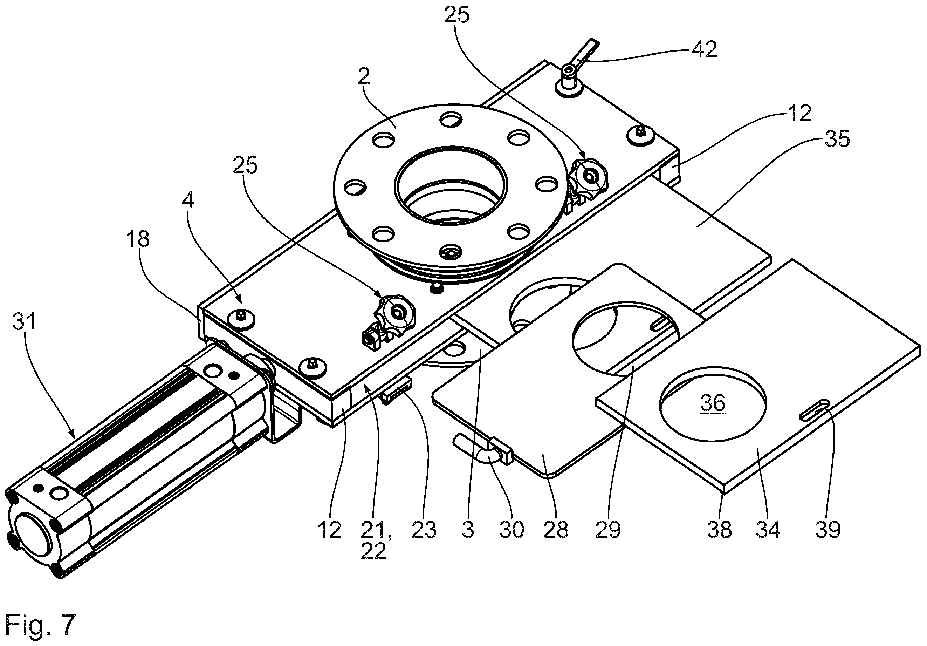

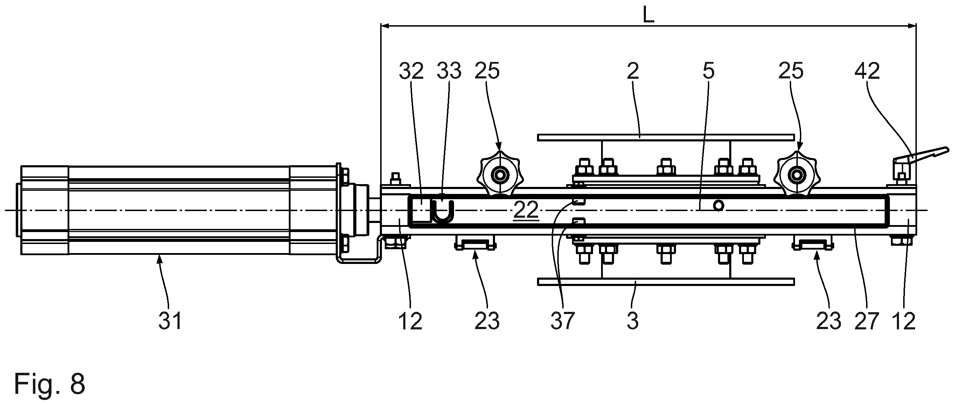

Ein in Fig. 1 bis 8 als Ganzes mit 1 gekennzeichneter Absperrschieber kann in einer nicht dargestellten Förderleitung und/oder in einer nicht dargestellten Fallleitung in einer Anlage zur Herstellung und/oder zur Verarbeitung von Schüttgut angeordnet sein. Dazu weist der Absperrschieber 1 einen Zuführflansch 2 und einen Abführflansch 3 auf, die jeweils an einem Gehäuse 4 des Absperrschiebers 1 angeordnet, insbesondere einteilig angegossen oder angeschraubt, sind. Das Gehäuse 4 und insbesondere der daran angeordnete Zuführflansch 2 und insbesondere der am Gehäuse 4 angeordnete Abführflansch 3 sind aus einem metallischen Werkstoff, insbesondere aus Edelstahl, insbesondere aus CrNi-Edelstahl, z.B. mit den Werkstoffnummern gemäß dem Stahlinstitut VDEh 1.4301, 1.4306, 1.4307 oder 1.4541, oder CrNiMo-Edelstahl, z.B. 1.4401, 1.4404 oder 1.4571 hergestellt.

Das Gehäuse 4 ist quaderförmig ausgeführt mit einer sich entlang einer Längsachse 5 des Gehäuses 4 erstreckenden Länge L, einer dazu senkrecht orientierten Breite B und einer zur Länge L und zur Breite B senkrecht orientierten Höhe H. Das Gehäuse 4 ist flachbauend ausgeführt. Das bedeutet, dass die Länge L und die Breite B jeweils größer sind als die Höhe H.

Das Gehäuse 4 weist eine erste Seitenwand 6 auf, die gemäß Fig. 1 an einer Oberseite des Gehäuses 4 angeordnet ist. Die erste Seitenwand 6 erstreckt sich in einer Ebene, die von der Breitenrichtung und der Längenrichtung des Gehäuses 4 vorgegeben ist. Die erste Seitenwand 6 weist eine Zuführöffnung 7 auf, durch die Schüttgut in das Gehäuse 4 zugeführt werden kann. An der Zuführöffnung 7 ist der Zuführflansch 2 angeordnet. Der Zuführflansch 2 ist an der ersten Seitenwand 6 mittels eines ringförmigen Dichtungselements 8 abgedichtet. Das Dichtungselement 8 ist aus einem kompressiblen Material ausgeführt.

Der ersten Seitenwand 6 ist gegenüberliegend eine zweite Seitenwand 9 angeordnet, die eine Abführöffnung 10 aufweist. An der Abführöffnung 10 ist der Abführflansch 3 angeordnet.

Die Zuführöffnung 7 und die Abführöffnung 10 definieren eine Strömungsrichtung 11 durch das Gehäuse 4. Die Zuführöffnung 7 und die Abführöffnung 10 sind konzentrisch bezüglich der Strömungsrichtung 11 angeordnet. Die Strömungsrichtung 11 ist parallel zur Höhenrichtung des Gehäuses 4 orientiert.

Die erste Seitenwand 6 und die zweite Seitenwand 9 sind parallel zueinander orientiert. Die erste Seitenwand 6 und die zweite Seitenwand 9 sind insbesondere jeweils in einer Ebene angeordnet, die parallel zu einer Ebene ist, die von der Längenrichtung und von der Breitenrichtung des Gehäuses 4 aufgespannt wird.

Entlang der Längsachse 5 ist das Gehäuse 4 jeweils durch einen Verbindungssteg 12 abgeschlossen. Der Verbindungssteg 12 wird auch als Zwischenstück bezeichnet. Die Verbindungsstege 12 verbinden jeweils die erste Seitenwand 6 mit der zweiten Seitenwand 9. Die zweite Seitenwand 9 ist mit mehreren Verbindungsschrauben 13 mit dem jeweiligen Verbindungssteg 12 verschraubt. Dazu weist jeder Verbindungssteg 12 mehrere Gewindebohrungen mit jeweils einem Innengewinde auf, das zu einem Außengewinde der Verbindungsschrauben 13 korrespondiert. Die Verbindungsstege 12 sind jeweils fest mit der zweiten Seitenwand 9 verbunden.

Der Absperrschieber 1 weist eine Verstelleinheit auf, die mehrere Verstellelemente 14 umfasst. Gemäß dem gezeigten Ausführungsbeispiel sind vier Verstellelemente 14 vorgesehen. Es versteht sich, dass in Abhängigkeit der Größe des Gehäuses 4 auch mehr oder weniger als vier Verstellelemente 14 vorgesehen sein können.

Jedes Verstellelement 14 ist als Gewindespindel mit einem Bewegungsgewinde 15 ausgeführt. Das Bewegungsgewinde 15 wirkt mit einem Gewindesegment 16 zusammen, das ein zu dem Bewegungsgewinde 15 korrespondierendes Innengewinde aufweist. Das Gewindesegment 16 ist in der ersten Seitenwand 6 befestigt. Das Verstellelement 14 ist durch den Verbindungssteg 12 geführt und an seiner Unterseite an der zweiten Seitenwand 9 abgestützt. Mit dem Bewegungsgewinde 15 ist das Verstellelement 14 durch das Gewindesegment 16 geführt. Das Verstellelement 14 steht an einer Oberseite der ersten Seitenwand 6 mit einem Kraftübertragungsabschnitt 17 über. Mittels eines Werkzeugs kann an dem Kraftübertragungsabschnitt 17 ein Drehmoment auf das Verstellelement 14 aufgebracht werden. Der Kraftübertragungsabschnitt weist eine unrunde Außenkontur auf. Gemäß dem gezeigten Ausführungsbeispiel weist der Kraftübertragungsabschnitt 17 eine Vierkant-Außenkontur auf. Es ist auch möglich, dass der Kraftübertragungsabschnitt 17 eine Dreikant-Außenkontur, eine Sechskant-Außenkontur, eine Achtkant-Außenkontur oder eine andere unrunde Außenkontur aufweist.

An einer in Fig. 1 nicht sichtbaren Hinterseite weist das Gehäuse 4 eine dritte Seitenwand 18 auf, die das Gehäuse 4 an der Rückseite verschließt. Gemäß dem gezeigten Ausführungsbeispiel ist die dritte Seitenwand an ihrer Unterseite um eine erste Schwenkachse 19 schwenkbar an der zweiten Seitenwand 9 angelenkt. Es ist alternativ möglich, dass die dritte Seitenwand 18 fest und insbesondere nicht lösbar und insbesondere nicht schwenkbar mit der ersten Seitenwand 6, der zweiten Seitenwand 9 und den Verbindungsstegen 12 verbunden ist.

Der dritten Seitenwand 18 gegenüberliegend ist an dem Gehäuse 4 eine vierte Seitenwand angeordnet. Die vierte Seitenwand bildet einen Gehäusedeckel 20. Der Gehäusedeckel 20 dient zum Verschließen einer Gehäuseöffnung 21, die durch die Stirnseiten der ersten Seitenwand 6, der zweiten Seitenwand 9 und der beiden Verbindungsstege 12 begrenzt ist. Die Gehäuseöffnung 21 ist gemäß Fig. 1 seitlich an dem Gehäuse 4 angeordnet. Die Gehäuseöffnung 21 weist eine Flächennormale auf, die senkrecht zur Längsachse 5 orientiert ist. Die Flächennormale der Gehäuseöffnung 21 ist entlang der Breitenrichtung des Gehäuses 4 orientiert. Über die Gehäuseöffnung 21 ist ein von dem Gehäuse 4 umschlossener Innenraum 22 unmittelbar zugänglich.

Der Gehäusedeckel 20 ist mit zwei Scharnieren 23 schwenkbar um eine zweite Schwenkachse 24 schwenkbar an der zweiten Seitenwand 9 angelenkt. Zum Arretieren des Gehäusedeckels 20 in der geschlossenen Anordnung dienen zwei an der ersten Seitenwand 6 angebrachte Schwenkschrauben 25, die jeweils mit einer U-förmigen Aufnahme 26 an dem Gehäusedeckel 20 zusammenwirken.

An einer der Gehäuseöffnung 21 zugewandten Innenseite ist an dem Gehäusedeckel 20 eine umlaufende Dichtung 27 zum Abdichten der Gehäuseöffnung 21 angeordnet.

In dem Innenraum 22 ist ein Schieberblatt 28 angeordnet. Das Schieberblatt 28 ist plattenförmig ausgeführt und weist eine im Wesentlichen rechteckförmige Außenkontur auf. Die Außenkontur kann in den Eckenbereichen abgerundet sein. Das Schieberblatt 28 weist eine Durchgangsöffnung 29 auf, die rund ausgeführt ist. An dem Schieberblatt 28 ist ein Kopplungselement 30 befestigt. Das Kopplungselement 30 ist im Wesentlichen L-förmig ausgeführt. Das Kopplungselement 30 weist einen am Schieberblatt 28 befestigten Bogenabschnitt auf, der eine 90°-Krümmung aufweist. Ein sich an den Bogenabschnitt anschließender Geradabschnitt bildet das freie Ende des Kopplungselements 30. Das freie Ende des Kopplungselements 30 ist entlang der Breitenrichtung des Gehäuses 4 orientiert. Wesentlich ist, dass das Kopplungselement 30, insbesondere das freie Ende des Kopplungselements 30 in Breitenrichtung des Gehäuses 4, also entlang der Flächennormalen der Gehäuseöffnung 21, hinterschnittsfrei ausgeführt ist. Das Kopplungselement 30 ermöglicht eine Verlagerung des Schieberblatts 28 entlang der Flächennormalen zu der Gehäuseöffnung 21 hin.

Das Schieberblatt 28 weist eine Plattendicke d auf, die konstant ist. Das Schieberblatt 28 ist flach und eben ausgeführt. Das Schieberblatt 28 ist aus einem metallischen Werkstoff, insbesondere aus Edelstahl, insbesondere aus CrNi-Edelstahl, z.B. 1.4301, 1.4306, 1.4307 oder 1.4541, oder CrNiMo-Edelstahl, z.B. 1.4401, 1.4404 oder 1.4571 hergestellt. Bei der Förderung von Kunststoffschüttgut ist es auch möglich, dass das Schieberblatt 28 aus einem Aluminiumwerkstoff hergestellt ist.

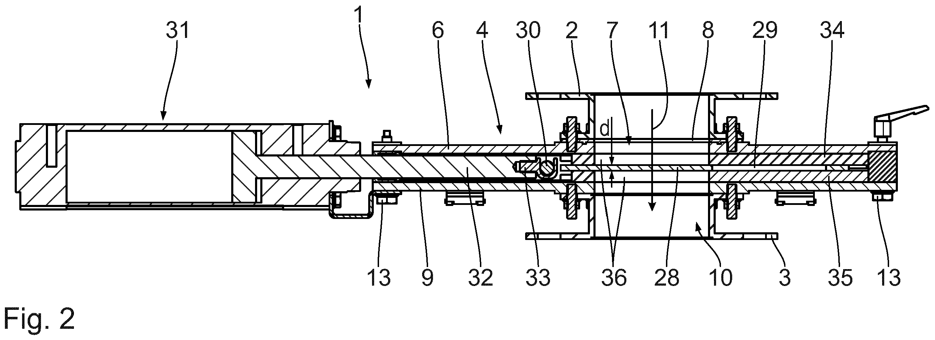

Das Schieberblatt 28 ist entlang der Längsachse 5 im Gehäuse zwischen einer Durchflussstellung und einer Absperrstellung verlagerbar. Die Absperrstellung ist in Fig. 2 dargestellt. Die Durchflussstellung ist in Fig. 1 dargestellt. In der Durchflussstellung ist die Zuführöffnung 7 mit der Abführöffnung 10 für eine Schüttgutströmung entlang der Strömungsrichtung 11 verbunden. Dies ist dadurch erreicht, dass die Durchgangsöffnung 29 fluchtend zu der Zuführöffnung 7 und der Abführöffnung 10 angeordnet ist. Entsprechend ist in der Absperrstellung die Zuführöffnung 7 von der Abführöffnung 10 durch das Schieberblatt 28 getrennt. Die Durchgangsöffnung 29 ist nicht-fluchtend zu der Zuführöffnung 7 und der Abführöffnung 10 angeordnet. Insbesondere liegt die Durchgangsöffnung 29 außerhalb einer senkrechten Projektion der Zuführöffnung 7 und/oder der Abführöffnung 10 entlang der Strömungsrichtung 11.

Zum Verlagern des Schieberblatts 28 dient ein erster Verlagerungsantrieb 31, der gemäß dem gezeigten Ausführungsbeispiel als pneumatischer Linearantrieb ausgeführt ist. Der erste Verlagerungsantrieb 31 ist an einer der Stirnseiten des Gehäuses 4 gekoppelt, die durch einen der Verbindungsstege 12 abgeschlossen wird. Ein Kolben 32 des ersten Verlagerungsantriebs 31 ist durch eine Öffnung in dem Verbindungssteg 12 in den Innenraum 22 des Gehäuses 4 geführt. An dem Kolben 32 ist ein Gegen-Kopplungselement 33 angeordnet, das zur Aufnahme des Kopplungselements 30 des Schieberblatts 28 dient.

In Höhenrichtung des Gehäuses 4, also entlang der Strömungsrichtung 11, ist zwischen dem Schieberblatt 28 und der ersten Seitenwand 6 eine erste Dichtplatte 34 und zwischen dem Schieberblatt 28 und der zweiten Seitenwand 9 eine zweite Dichtplatte 35 angeordnet. Die Dichtplatten 34, 35 sind im Wesentlichen identisch ausgeführt. Die Dichtplatten 34, 35 sind aus PTFE hergestellt. Die Dichtplatten 34, 35 dienen zum Abdichten des Schieberblatts 28 gegenüber der Zuführöffnung 7 und der Abführöffnung 10 in der Absperrstellung.

Die Dichtplatten 34, 35 weisen jeweils eine Durchgangsöffnung 36 auf, um eine Schüttgutströmung durch den Absperrschieber 1 zu gewährleisten. Die Dichtplatten 34, 35 sind in dem Gehäuse 4 bezüglich der Längsachse 5 mittels mehrerer Halteelemente 37 gehalten. Die Halteelemente 37 sind jeweils an einer dem Innenraum 22 zugewandten Innenseite der ersten Seitenwand 6 und der zweiten Seitenwand 9 angeordnet, insbesondere darin eingeschraubt.

Die Dichtplatten 34, 35 weisen jeweils an ihrer dem Schieberblatt 28 zugewandten Oberfläche eine Führungsleiste 38 auf. Die Führungsleisten 38 erstrecken sich entlang der Längsachse 5 im Gehäuse 4. Die Führungsleisten 38 sind als erhabene Längsstege jeweils an einer Außenseite der Dichtplatten 34, 35 angeordnet, insbesondere einteilig angeformt. Die Führungsleisten 38 sind jeweils integral an der Dichtplatte 34 bzw. an der Dichtplatte 35 ausgeführt. Insbesondere sind die Führungsleisten 38 jeweils an einer der dritten Seitenwand 18 zugewandten Längserstreckung und an einer dem Gehäusedeckel 20 zugewandten Längserstreckung angeordnet. Durch die Führungsleisten 38 ist das Schieberblatt 28 entlang der Längsachse 5 in dem Gehäuse 4 zuverlässig axial geführt. Ein Verkanten des Schieberblatts 28 bei der Verlagerung mittels des ersten Verlagerungsantriebs 31 ist ausgeschlossen.

Die Dichtplatten 34, 35 weisen jeweils eine Entnahmetasche 39 auf. Die Entnahmetasche 39 ist jeweils an einer der ersten Seitenwand 6 zugewandten Oberseite der Dichtplatten 34, 35 angeordnet. Die Entnahmetaschen 39 sind jeweils in einem der Gehäuseöffnung 21 zugewandten Randbereich an den Dichtplatten 34, 35 angeordnet.

An der dritten Seitenwand 18 ist ein Auswurfelement 40 zum Auswerfen der ersten Dichtplatte 34 und des Schieberblatts 28 vorgesehen. Das Auswurfelement 40 ist als Gewindestift ausgeführt, der in eine Gewindebohrung 41 der dritten Seitenwand 18 eingeschraubt ist. Ein an der dritten Seitenwand 18 nach außen vorragenden Abschnitt weist das Auswurfelement 40 eine unrunde Außenkontur auf, die im Wesentlichen identisch zu dem Kraftübertragungsabschnitt 17 des Verstellelements 14 ausgeführt ist.

Nachfolgend wird anhand von Fig. 1 bis 8 die Handhabung des Absperrschiebers 1 näher erläutert. Bei geschlossenem Gehäuse 4, also wenn der Gehäusedeckel 20 die Gehäuseöffnung 21 verschließt und mittels der Schwenkschrauben 25 arretiert ist, wird eine Schüttgutströmung durch den Absperrschieber 1 mittels des Schieberblatts 28 unterbrochen oder freigegeben. Dazu wird das Schieberblatt 28 mittels des ersten Verlagerungsantriebs 31 zwischen der Durchflussstellung und der Absperrstellung verlagert.

Um eine ausreichende Abdichtung des Schieberblatts 28 zu gewährleisten und insbesondere zu vermeiden, dass Schüttgut in Spalte gelangt, die beispielsweise zwischen der ersten Seitenwand 6 und der ersten Dichtplatte 34 bzw. zwischen der ersten Dichtplatte 34 und dem Schieberblatt 28 bzw. zwischen dem Schieberblatt 28 und der zweiten Dichtplatte 35 bzw. zwischen der zweiten Dichtplatte 35 und der zweiten Seitenwand 9 gebildet sind, kann ein entlang der Höhenrichtung des Gehäuses 4 orientierter Abstand A zwischen den Seitenwänden 6, 9 veränderlich festgelegt werden.

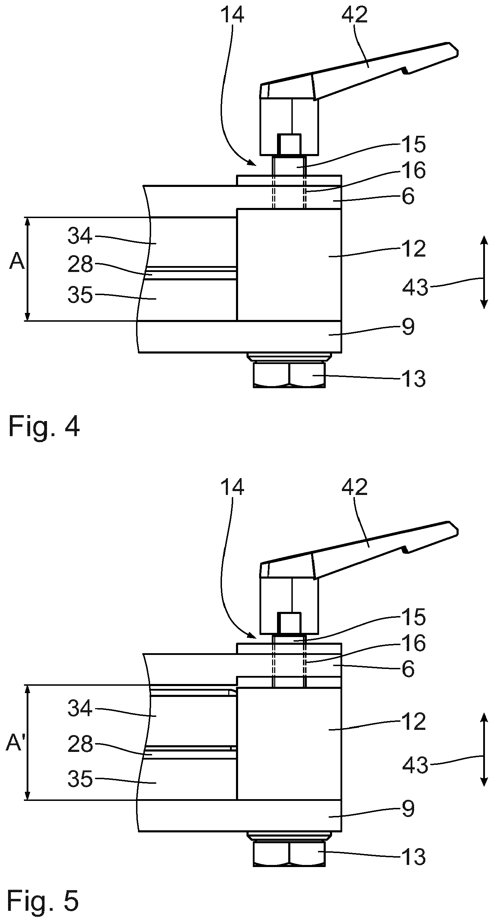

Die Verstellung des Abstands A wird nachfolgend anhand von Fig. 4 und 5 näher erläutert. Gemäß Fig. 4 sind die Dichtplatten 34, 35 an das Schieberbblatt 28 in Höhenrichtung des Gehäuses 4 angepresst. Der Abstand A ist vergleichsweise klein und insbesondere minimal.

Um den Abstand A zu vergrößern und in den geänderten Abstand A' gemäß Fig. 5 zu verändern werden die Verstellelemente 14 mittels eines Werkzeugs 42 in Form eines Spannhebels betätigt, also gedreht. Dadurch, dass die Verstellelemente 14 mit dem Bewegungsgewinde 15 in dem Gewindesegment 16 in der ersten Seitenwand 6 angeordnet sind, wird durch die Drehbewegung eine Verstellung der ersten Seitenwand 6 entlang einer Verstellrichtung 43 bezüglich dem Verbindungssteg 12 und damit bezüglich der zweiten Seitenwand 9 erreicht. In Abhängigkeit der Drehrichtung des Werkzeugs 42 erfolgt die Verstellung der ersten Seitenwand 6 entweder zu der zweiten Seitenwand 9 hin oder von der zweiten Seitenwand 9 weg.

In der in Fig. 5 gezeigten Anordnung sind die Dichtplatten 34, 35 mit dem Schieberblatt 28 nicht aktiv verpresst.

Um das Schieberblatt 28 und die Dichtplatten 34, 35 aus dem Gehäuse zu entnehmen, wird das Auswurfelement 40 mittels des Werkzeugs 42 betätigt. Dadurch wird das Auswurfelement 40 in den Innenraum 22 des Gehäuses 4 entlang einer Auswurfrichtung 44 eingeführt. Die Auswurfrichtung 44 ist von der dritten Seitenwand 18 zu der Gehäuseöffnung 21 hin gerichtet.

Mit dem Auswurfelement 40 wird zunächst die erste Dichtplatte 34 entlang der Auswurfrichtung 44 aus dem Gehäuse 4 herausgedrückt. Dadurch, dass in Höhenrichtung kein aktiver Anpressdruck auf die Dichtplatten 34, 35 und das Schieberblatt 28 wirkt, ist das Auswerfen erleichtert. Das Herausziehen der ersten Dichtplatte 34 aus dem Gehäuse 4 ist durch die Entnahmetasche 39 erleichtert. Ein Bediener kann in die Entnahmetasche manuell eingreifen.

Anschließend kann das Schieberblatt 28 aus dem Gehäuse 4 herausgezogen werden. Dadurch, dass das Kopplungselement 30 ein freies, bolzenartiges Ende aufweist, das in dem nutförmigen Gegen-Kopplungselement 33 hinterschnittsfrei entlang der Auswurfrichtung 44 gelagert ist, kann das Schieberblatt 28 entlang der Auswurfrichtung 44 unmittelbar abgezogen werden.

Zuletzt kann die zweite Dichtplatte 35 entnommen werden, was durch die Entnahmetasche 39 vereinfacht ist.

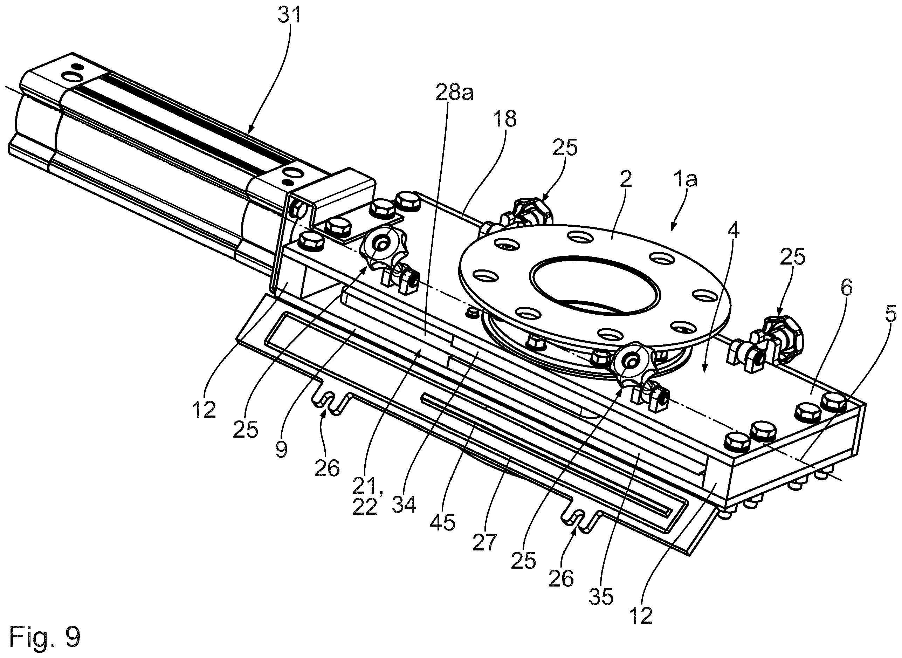

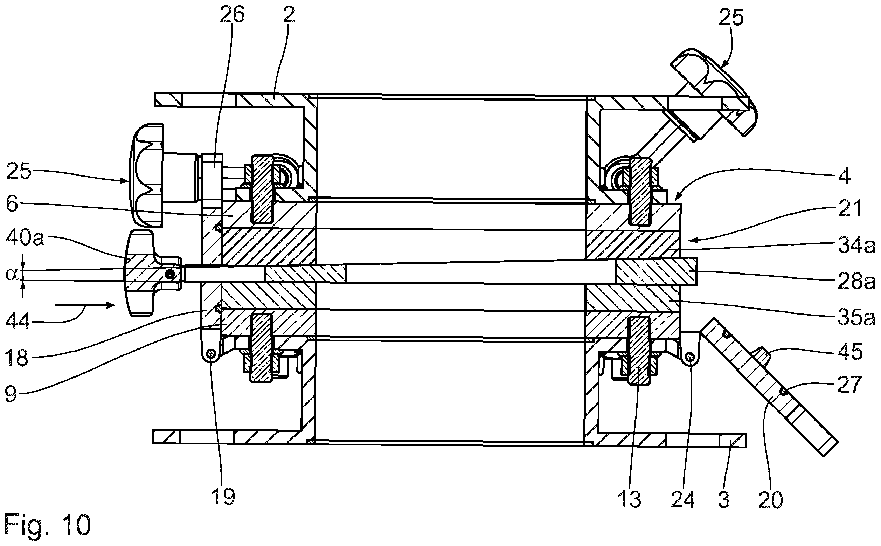

Im Folgenden wird unter Bezugnahme auf Fig. 9 und 10 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Das Schieberblatt 28a des Absperrschiebers 1a weist eine Plattendicke auf, die entlang der Auswurfrichtung 44 veränderlich ist. Das Schieberblatt 28a ist keilförmig ausgeführt. Entlang der Längsachse 5 ist die Plattendicke des Schieberblatts 28a konstant, so dass die Verlagerung des Schieberblatts 28a entlang der Längsachse 5 möglich ist. In einer Schnittebene senkrecht zur Längsachse 5, die der Zeichenebene gemäß Fig. 10 entspricht, weist das Schieberblatt 28a im Wesentlichen eine Keilform, insbesondere eine einseitige Trapezform auf, wobei die Unterseite parallel zur zweiten Seitenwand 9 orientiert ist. Die Oberseite des Schieberblatts 28a ist gegenüber der Unterseite des Schieberblatts 28a mit einem Neigungswinkel α geneigt angeordnet. Neigungswinkel α beträgt insbesondere höchstens 10°, insbesondere höchstens 5° und insbesondere höchstens 3°. Der Neigungswinkel α beträgt insbesondere mindestens 0,1°, insbesondere mindestens 0,5° und insbesondere mindestens 1°. Es ist auch möglich, dass die Unterseite gegenüber der zweiten Seitenwand 9 geneigt angeordnet und/oder die Oberseite des Schieberblatts 28a parallel zur ersten Seitenwand 6 angeordnet ist. Wesentlich ist, dass die Oberseite und die Unterseite des Schieberblatts 28a einen von 0 verschiedenen Neigungswinkel n einschließen.

Die Keilform des Schieberblatts 28a ist derart orientiert, dass die größere Plattendicke der Gehäuseöffnung 21 zugewandt ist. Dadurch, dass das Schieberblatt 28a eine Keilform aufweist, ist das Auswerfen des Schieberblatts 28a vereinfacht und insbesondere mit reduziertem Kraftaufwand möglich. Entsprechend ist an dem Auswurfelement 40a ein Sterngriff einteilig angeformt. Ein Werkzeug zum Betätigen des Auswurfelements 40a ist nicht erforderlich.

Dadurch, dass das Schieberblatt 28a keilförmig ausgeführt ist, ist das Schieberblatt 28a zwischen den Dichtplatten 34a und 35a in dem Gehäuse 4 automatisch verspannt, insbesondere entlang der Höhenrichtung, angeordnet. Eine Verstelleinheit gemäß dem ersten Ausführungsbeispiel ist gemäß diesem Ausführungsbeispiel nicht erforderlich, kann aber zusätzlich vorgesehen sein.

Dadurch, dass das Schieberblatt 28a keilförmig ausgeführt ist, wird bei dem Absperrschieber 1a beim Auswerfen zunächst das Schieberblatt 28a ausgeworfen. Schwerkraftbedingt löst sich dann die obere, erste Dichtplatte 34a und kann entnommen werden. Abschließend kann die zweite, untere Dichtplatte 35a aus dem Gehäuse 4 entnommen werden.

An einer Innenseite des Gehäusedeckels 20 ist ein zusätzlicher Führungssteg 45 angeordnet, der eine Verlagerung des Schieberblatts 28a im Gehäuse entlang der Längsachse 5 führt. Der Führungssteg 45 ist insbesondere aus einem Kunststoffmaterial ausgeführt.

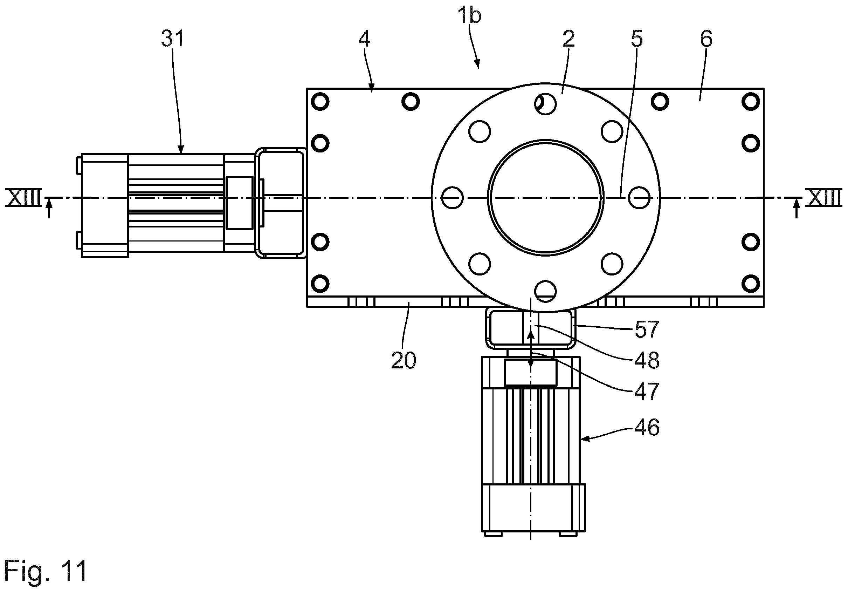

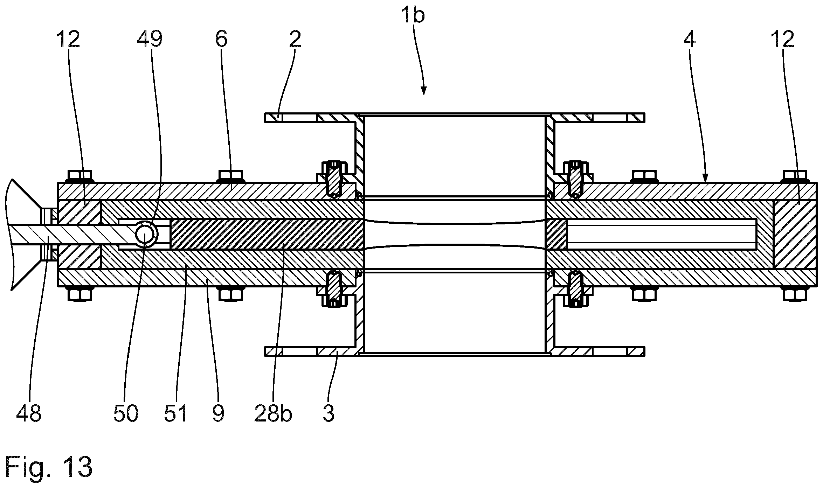

Im Folgenden wird unter Bezugnahme auf Fig. 11 bis 15 ein weiteres Ausführungsbeispiel der Erfindung beschreiben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten die gleichen Bezugszeichen mit einem nachgestellten b.

Ein wesentlicher Unterschied gegenüber den beiden vorherigen Ausführungsbeispielen besteht darin, dass der Absperrschieber 1b einen zweiten Verlagerungsantrieb 46 aufweist. Der zweite Verlagerungsantrieb 46 ist mit dem Schieberblatt 28b gekoppelt. Der zweite Verlagerungsantrieb 46 ermöglicht eine Verlagerung des Schieberblatts entlang einer Verlagerungsrichtung 47. Die Verlagerungsrichtung 47 ist entlang der Breitenrichtung des Gehäuses 4 orientiert. Die Verlagerungsrichtung 47 entspricht der Flächennormalen der Gehäuseöffnung 21.

Die Verlagerungsrichtung 47 ist quer und insbesondere senkrecht zu der Längsachse 5 des Gehäuses orientiert. Der zweite Verlagerungsantrieb 46 weist eine Kolbenstange 48 auf, die eine Führungsaufnahme 49 umfasst. Die Führungsaufnahme 49 ist ösenförmig ausgeführt und dient zur Aufnahme einer Führungsstange 50, die an dem Schieberblatt 28b befestigt ist. Insbesondere erstreckt sich die Führungsstange 50 entlang der Längsachse 5.

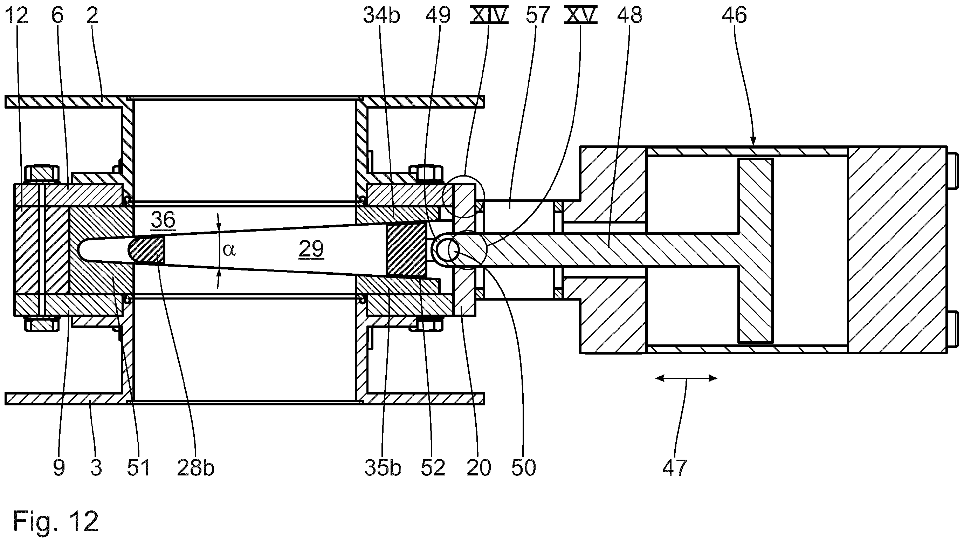

Der zweite Verlagerungsantrieb 46 ermöglicht es, das Schieberblatt 28b in eine Reinigungsstellung zu verlagern, die in Fig. 12 dargestellt ist. In der Reinigungsstellung ist das Schieberblatt 28b teilweise gegenüber der Durchflussstellung verlagert, so dass die Öffnung 29 mit den Durchgangsöffnungen 36 in der ersten Dichtplatte 34b und der zweiten Dichtplatte 35b nur teilweise überlappend angeordnet ist.

Das Schieberblatt 28b ist keilförmig ausgeführt, kann aber auch eben, also mit einer konstanten Plattendicke analog dem ersten Ausführungsbeispiel ausgeführt sein. Die der ersten Seitenwand 6 zugewandte Oberseite und die der zweiten Seitenwand 9 zugewandte Unterseite des Schieberblatts 28b sind jeweils gegenüber den genannten Seitenwänden 6, 9 geneigt angeordnet. Es ist alternativ möglich, dass entweder nur die Oberseite oder nur die Unterseite des Schieberblatts 28b geneigt angeordnet sind und die jeweils andere Seite parallel zu der ersten Seitenwand 6 bzw. der zweiten Seitenwand 9 angeordnet sind. Das Schieberblatt 28b weist einen Neigungswinkel α von höchstens 15°, insbesondere höchstens 12°, insbesondere höchstens 10°, insbesondere höchstens 8° und insbesondere höchstens 5° und insbesondere höchstens 3° auf. Der Neigungswinkel α beträgt mindestens 0,5°, insbesondere mindestens 1°, insbesondere mindestens 2° und insbesondere mindestens 3°.

Der Neigungswinkel α des Schieberblatts 28b ermöglicht einen vergleichsweise großen Spalt, wenn sich der Absperrschieber 1b in der Reinigungsstellung befindet. Das Reinigen der entstehenden Spalte mittels einer Reinigungsflüssigkeit ist dadurch vereinfacht und insbesondere der Reinigungseffekt verbessert.

In der Reinigungsstellung gemäß Fig. 12 kann der Absperrschieber 1b, insbesondere der Innenraum 22 des Gehäuses 4 und insbesondere die zwischen dem Schieberblatt 28b und den Dichtplatten 34b, 35b entstehenden Spalte mittels einer Reinigungsflüssigkeit gereinigt werden. Es ist insbesondere nicht erforderlich, das Gehäuse 4 zum Reinigen des Absperrschiebers 1 zu öffnen. Der Absperrschieber 1b ermöglicht eine sogenannte Clean-In-Place-Reinigung.

Die erste Dichtplatte 34b und die zweite Dichtplatte 35b sind miteinander einstückig verbunden und in einer Dichtkassette 51 integriert.

An der dem zweiten Verlagerungsantrieb 46 zugewandten Außenseite der Dichtkassette 51 ist eine Drainageöffnung 52 vorgesehen, durch die Reinigungsflüssigkeit, insbesondere selbsttätig, aus dem Absperrschieber 1b ablaufen kann.

Der Gehäusedeckel 20 ist gegenüber dem Gehäuse 4, insbesondere gegenüber der ersten Seitenwand 6, der zweiten Seitenwand 9 und den seitlichen Verbindungsstegen 12, abgedichtet. Zum Abdichten dient ein umlaufendes Dichtungselement 53. Das Dichtungselement 53 ist insbesondere aus einem Dichtungsmaterial, insbesondere aus Polytetrafluorethylen (PTFE) hergestellt. Das Dichtungselement 53 weist eine Kontur auf, die der Kontur der Gehäuseöffnung 21 entspricht. Gemäß dem gezeigten Ausführungsbeispiel ist die Kontur als Rechteckrahmen ausgeführt.

Das Dichtungselement 53 ist in eine dafür vorgesehene Dichtungsausnehmung 54 eingelegt. Die Dichtungsausnehmung 54 ist an dem Gehäuse 4, insbesondere an der ersten Seitenwand 6, der zweiten Seitenwand 9 und an den Verbindungsstegen 12 integriert angeordnet. Die Dichtungsausnehmung 54 ist insbesondere als eine Vertiefung mit einer Tiefe t gegenüber der Stirnfläche 55 des Gehäuses 4 ausgeführt. Es ist auch möglich, dass die Dichtungsausnehmung 54 am Gehäusedeckel 20 angeordnet ist. Die Dichtungsausnehmung 54 weist eine konstante Tiefe t auf, die sich bis zum Innenraum 22 des Gehäuses 4 hin erstreckt. Die Dichtungsausnehmung 54 weist insbesondere eine Breite B auf, die insbesondere parallel zu der Stirnfläche 55 orientiert ist. Insbesondere gilt 0,9 × B ≤ H ≤ 1,1 × B, insbesondere 0,95 × B ≤ H ≤ 1,05 × B.

Das Dichtungselement 53 weist eine Dicke D auf, die im Wesentlichen der Tiefe t der Dichtungsausnehmung 54 entspricht. Es ist möglich, dass die Dicke D des Dichtungselements 53 größer ist als die Tiefe t der Dichtungsausnehmung 54. Insbesondere gilt: D ≥ t, insbesondere D ≥ 1,01 × t, insbesondere D ≥ 1,02 × t, insbesondere D ≥ 1,05 × t, insbesondere D ≥ 1,1 × t, und insbesondere D ≥ 1,2 × t. Insbesondere ist das Dichtungselement 53 in der Dichtungsausnehmung 54 durch den Gehäusedeckel 20 kraftschlüssig angeordnet, insbesondere reibschlüssig und insbesondere eingepresst.

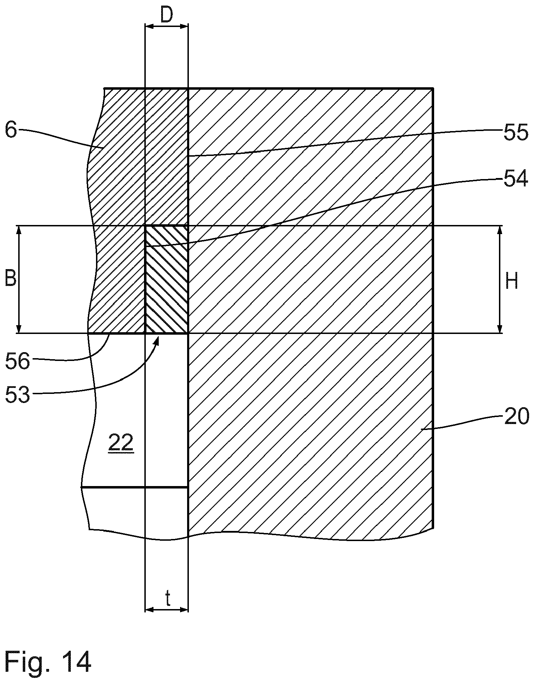

Das Dichtungselement 53 weist, wie in Fig. 14 dargestellt, eine rechteckförmige Querschnittsfläche auf mit der Dicke D und einer Höhe H. Das Dichtungselement 53 ist insbesondere eine Flachdichtung. Die Dicke D beträgt insbesondere höchstens 5 mm, insbesondere höchstens 3 mm, insbesondere höchstens 2 mm, insbesondere höchstens 1,5 mm, insbesondere höchstens 1,0 mm, insbesondere höchstens 0,8 mm, insbesondere höchstens 0,5 mm, insbesondere höchstens 0,3 mm und insbesondere höchstens 0,1 mm.

Die Höhe H des Dichtungselements 53 ist insbesondere derart gewählt, dass das Dichtungselement 53 frontbündig mit einer Innenseite 56 des Gehäuses 4, insbesondere der ersten Seitenwand 6, der zweiten Seitenwand 9 und der Verbindungsstege 12 abschließt. Das Dichtungselement 53 ist produktberührend ausgeführt. Das bedeutet, dass Produkt, das in den Übergangsbereich von Gehäusedeckel 20 zu Gehäuse 4, insbesondere in den Übergangsbereich von Gehäusedeckel 20 und erster Seitenwand 6, zweiter Seitenwand 9 und/oder den Verbindungsstegen 12, gelangt, direkt das Dichtungselement 53 berührt. Dort angeordnetes Produkt, also Schüttgut, kann bei einem Reinigungsprozess, insbesondere der vorstehend beschriebenen CIP-Reinigung, insbesondere mittels einer Reinigungsflüssigkeit rückstandslos entfernt werden. Durch die frontbündige Anordnung des Dichtungselements 53 sind Spalte und/oder Rücksprünge am Gehäuse 4 vermieden, in welchen sich Schüttgut ablagern könnte.

Es ist alternativ möglich, dass das Dichtungselement 53 mit der Höhe H derart ausgeführt ist, dass das Dichtungselement 53 geringfügig in den Innenraum 22 hineinragt oder geringfügig gegenüber der Innenseite 56 rückspringt.

Mit der Ausführung des Dichtungselements 53 ist die CIP-Reinigung des Absperrschiebers 1b zuverlässig möglich.

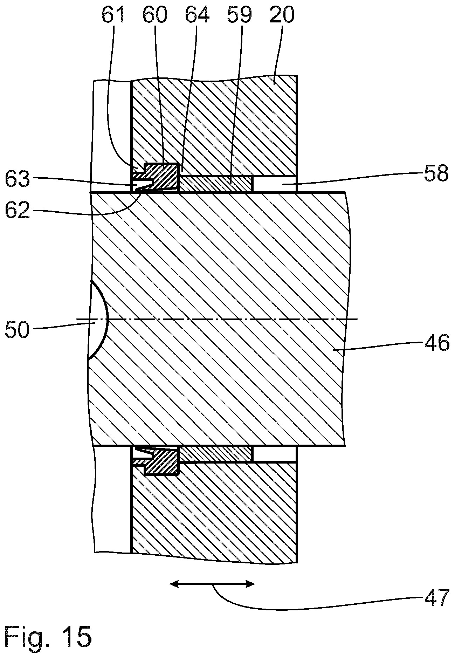

Fig. 15 zeigt im Detail die Durchführung der Kolbenstange 48 durch den Gehäusedeckel 20 hin zu dem zweiten Verlagerungsantrieb 46. Um zu verhindern, dass Schüttgut in unbeabsichtigter Weise aus dem Gehäuse 4 des Absperrschiebers 1, insbesondere über die Kolbenstange 48 in den zweiten Verlagerungsantrieb 46 gelangen kann, ist in dem Gehäusedeckel 20 ein Abstreiferelement 60 angeordnet. Das Abstreiferelement 60 ist ringförmig ausgeführt und aus einem Kunststoffmaterial, insbesondere aus einem thermoplastischen Kunststoffmaterial, insbesondere aus thermoplastischem Polyurethan (PU) ausgeführt. Das Material des Abstreiferelements weist eine Shore-Härte von höchstens A 100, insbesondere von höchstens A 95, insbesondere von höchstens A 90, insbesondere von höchstens A 80, insbesondere von höchstens A 60 und insbesondere von höchstens A 50 auf. Der Gehäusedeckel 20 weist eine Innenbohrung 58 auf, durch die die Kolbenstange 48 hindurchgeführt ist. Der Innendurchmesser der Innenbohrung 58 ist größer als der Außendurchmesser der Kolbenstange 48. In radialer Richtung bezogen auf die Verlagerungsrichtung 47 ist zwischen der Außenseite der Kolbenstange 48 und der Innenbohrung 58 eine Gleitlagerbuchse 59 angeordnet. Die Gleitlagerbuchse 59 ist auf die Kolbenstange 48 aufgeschoben. Die Gleitlagerbuchse 59 kann auch entfallen.

Das Abstreiferelement 60 ist in radialer Richtung bezogen auf die Verlagerungsrichtung 47 zwischen der Außenseite der Kolbenstange 48 und der Innenseite der Innenbohrung 58 angeordnet.

Das Abstreiferelement 60 ist an einer vorderen, dem Schieberblatt 28b zugewandten Anlageschulter 61 des Gehäusedeckels 20 und an einer hinteren, dem zweiten Verlagerungsantrieb 46 zugewandten Anlageschulter 64 axial entlang der Verlagerungsrichtung 47 in dem Gehäusedeckel 20 gehalten. Durch die Anlageschultern 61, 64 ist in dem Gehäusedeckel 20 eine Innennut ausgebildet, in die das Abstreiferelement 60 eingelegt ist. Das Abstreiferelement 60 ist dem Schieberblatt 28b zugewandt an dem Gehäusedeckel 20 angeordnet.

Das Abstreiferelement 60 weist insbesondere eine flexible Abstreiferlippe 62 auf, die an der Außenseite der Kolbenstange 48 berührend anliegt. Durch die Abstreiferlippe 62 ergibt sich eine umfängliche Kontaktfläche oder Kontaktlinie zwischen dem Abstreiferelement 60 und der Kolbenstange 48. In radialer Richtung bezogen auf die Verlagerungsrichtung 47 ist hinter der Abstreiferlippe 62 eine Ausnehmung 63 an dem Abstreiferelement 60 integriert angeordnet. Dadurch ist die Flexibilität, also die radiale Beweglichkeit der Abstreiferlippe 62 verbessert.

Mittels des Abstreiferelements 60 wird Schüttgut zuverlässig von der Kolbenstange 48 abgestriffen, wenn die Kolbenstange 48 entlang der Verlagerungsrichtung 47 zu dem zweiten Verlagerungsantrieb 46 hingezogen wird.

Ein identisches oder ähnliches Abstreiferelement kann auch an der Kolbenstange des ersten Verlagerungsantriebs 31 angeordnet sein.

Entlang der Verlagerungsrichtung 47 ist zwischen dem Gehäuse 4 und dem zweiten Verlagerungsantrieb 46, insbesondere zwischen dem Gehäusedeckel 20 und dem zweiten Verlagerungsantrieb 46 eine Befestigungskonsole 57 angeordnet. Mittels der Befestigungskonsole 57 ist der zweite Verlagerungsantrieb 46 an dem Gehäusedeckel 20 befestigt, insbesondere mittels nicht näher dargestellter Befestigungselemente, insbesondere Befestigungsschrauben, angeschraubt. Die Befestigungskonsole 57 kann durch ein Hohl-Profilelement, insbesondere ein Rechteck-Hohlprofilelement ausgeführt sein. Das Rechteck-Hohlprofilelement ist insbesondere derart an dem Absperrschieber 1b angeordnet, dass die Profillängsachse parallel zur Strömungsrichtung 11, also parallel zur Höhenrichtung des Gehäuses 4, orientiert ist.

## Patentansprüche

1. Absperrschieber für eine Förderleitung in einer Anlage zur Herstellung und/oder Verarbeitung von Schüttgut umfassend
a. ein eine Längsachse (5) aufweisendes Gehäuse (4) mit einer Zuführöffnung (7) zum Zuführen von Schüttgut in das Gehäuse (4) und mit einer Abführöffnung (10) zum Abführen von Schüttgut aus dem Gehäuse (4),
b. ein Schieberblatt (28; 28a; 28b), das zwischen einer Durchflussstellung, in der die Zuführöffnung (7) mit der Abführöffnung (10) für eine Schüttgutströmung entlang einer Strömungsrichtung (11) verbunden ist, und einer Absperrstellung, in der die Zuführöffnung (7) von der Abführöffnung (10) durch das Schieberblatt (28; 28a; 28b) getrennt ist, entlang der Längsachse (5) verlagerbar ist,
c. jeweils eine Dichtplatte (34, 35; 34a, 35a; 34b, 35b) zum Abdichten des Schieberblatts (28; 28a; 28b) gegenüber der Zuführöffnung (7) und gegenüber der Abführöffnung (10),
d. einen Gehäusedeckel (20), der zum Verschließen einer Gehäuseöffnung (21) am Gehäuse (4) lösbar befestigt ist,
**dadurch gekennzeichnet, dass** die Gehäuseöffnung (21) eine Flächennormale aufweist, die quer zur Strömungsrichtung (11) des Schüttguts orientiert ist und dass bei geöffnetem Gehäusedeckel (20) das Schieberblatt (28; 28a; 28b) zumindest teilweise aus dem Gehäuse (4) verlagerbar ist.

2. Absperrschieber gemäß Anspruch 1, **dadurch gekennzeichnet, dass** die Flächennormale der Gehäuseöffnung (21) senkrecht zur Strömungsrichtung (11) orientiert ist.

3. Absperrschieber gemäß einem der vorstehenden Ansprüche, **dadurch gekennzeichnet, dass** das Schieberblatt (28; 28a; 28b) plattenförmig ausgeführt ist.

4. Absperrschieber gemäß Anspruch 3, **dadurch gekennzeichnet, dass** das Schieberblatt (28) eine konstante Plattendicke (d) aufweist.

5. Absperrschieber gemäß Anspruch 4, **dadurch gekennzeichnet, dass** das Gehäuse (4) eine erste Seitenwand (6), an der die Zuführöffnung (7) angeordnet ist, und eine zweite Seitenwand (9), an der die Abführöffnung (10) angeordnet ist, aufweist, wobei ein entlang der Strömungsrichtung (11) orientierter Abstand (A, A') zwischen der ersten Seitenwand (6) und der zweiten Seitenwand (9) mittels einer Verstelleinheit (14) veränderlich festlegbar ist.

6. Absperrschieber gemäß Anspruch 5, **gekennzeichnet durch** mindestens ein an der ersten Seitenwand (6) und/oder an der zweiten Seitenwand (9) angeordnetes Dichtungselement (8) zum Abdichten der Zuführöffnung (7) und/oder der Abführöffnung (10) bei dem veränderlich eingestellten Abstand (A, A').

7. Absperrschieber gemäß Anspruch 3, **dadurch gekennzeichnet, dass** das Schieberblatt (28a; 28b) eine veränderliche Plattendicke (d) aufweist und insbesondere keilförmig ausgeführt ist.

8. Absperrschieber gemäß Anspruch 4 oder 7, **dadurch gekennzeichnet, dass** das Gehäuse (4) eine erste Seitenwand (6), an der die Zuführöffnung (7) angeordnet ist, und eine zweite Seitenwand (9), an der die Abführöffnung (10) angeordnet ist, aufweist, wobei die Seitenwände (6, 9) fest miteinander verbunden sind.

9. Absperrschieber gemäß einem der vorstehenden Ansprüche, **gekennzeichnet durch** ein Auswurfelement (40; 40a) zum Auswerfen mindestens einer Dichtplatte (34, 35; 34a, 35a; 34b, 35b) aus dem Gehäuse (4).

10. Absperrschieber gemäß einem der vorstehenden Ansprüche, **gekennzeichnet durch** mindestens ein in einem Innenraum (22) des Gehäuses (4) angeordnetes Halteelement (37) zum Halten jeweils einer Dichtplatte (34, 35; 34a, 35a; 34b, 35b) entlang der Längsachse (5).

11. Absperrschieber gemäß einem der vorstehenden Ansprüche, **dadurch gekennzeichnet, dass** die Dichtplatten (34, 35; 34a; 35a) separat voneinander ausgeführt sind.

12. Absperrschieber gemäß Anspruch 11, **dadurch gekennzeichnet, dass** die Dichtplatten (34, 35) jeweils eine, insbesondere integrierte, Führungsleiste (38) für eine Führung des Schieberblatts (28) entlang der Längsachse (5) aufweisen.

13. Absperrschieber gemäß einem der vorstehenden Ansprüche, **gekennzeichnet durch** einen zweiten Verlagerungsantrieb (46) zum Verlagern des Schieberblatts (28b) entlang einer Verlagerungsrichtung (47) in eine Reinigungsstellung, wobei die Verlagerungsrichtung (47) insbesondere quer, insbesondere senkrecht, zur Längsachse (5) orientiert ist.

14. Absperrschieber gemäß einem der Ansprüche 1 bis 10 und Anspruch 13, **dadurch gekennzeichnet, dass** die Dichtplatten (34b, 35b) in einer Dichtkassette (51) integriert angeordnet sind.

15. Absperrschieber gemäß Anspruch 13 oder 14, **gekennzeichnet durch** eine Drainageöffnung (52) zum, insbesondere selbsttätigen, Abfließen von Reinigungsflüssigkeit, wobei die Drainageöffnung (52) insbesondere an der Dichtkassette (51) angeordnet ist.

## Claims

1. Gate valve for a conveying line in a facility for the production and/or processing of bulk material comprising
a. a housing (4) having a longitudinal axis (5) with a feed opening (7) for feeding bulk material into the housing (4) and with a discharge opening (10) for discharging bulk material from the housing (4),
b. a gate blade (28; 28a; 28b) which is displaceable along the longitudinal axis (5) between a flow-through position, in which the feed opening (7) is connected to the discharge opening (10) for a flow of bulk material along a direction of flow (11), and a shut-off position, in which the feed opening (7) is separated from the discharge opening (10) by the gate blade (28; 28a; 28b),
c. one sealing plate (34, 35; 34a, 35a; 34b, 35b) each for sealing the gate blade (28; 28a; 28b) with respect to the feed opening (7) and with respect to the discharge opening (10),
d. a housing cover (20), which is detachably attached to the housing (4) to close a housing opening (21),
**characterized in that** the housing opening (21) has a surface normal which is oriented transversely to the direction of flow (11) of the bulk material and **in that** the gate blade (28; 28a; 28b) can be at least partially displaced out of the housing (4) when the housing cover (20) is open.

2. Gate valve according to claim 1, **characterized in that** the surface normal of the housing opening (21) is oriented perpendicularly to the direction of flow (11).

3. Gate valve according to any one of the preceding claims, **characterized in that** the gate blade (28; 28a; 28b) is plate-shaped.

4. Gate valve according to claim 3, **characterized in that** the gate blade (28) has a constant plate thickness (d).

5. Gate valve according to claim 4, **characterized in that** the housing (4) has a first side wall (6), on which the feed opening (7) is arranged, and a second side wall (9), on which the discharge opening (10) is arranged, wherein a distance (A, A') oriented along the direction of flow (11) between the first side wall (6) and the second side wall (9) can be variably fixed by means of an adjustment unit (14).

6. Gate valve according to claim 5, **characterized by** at least one sealing element (8) arranged on the first side wall (6) and/or on the second side wall (9) for sealing the feed opening (7) and/or the discharge opening (10) at the variably adjusted distance (A, A').

7. Gate valve according to claim 3, **characterized in that** the gate blade (28a; 28b) has a variable plate thickness (d) and is in particular wedge-shaped.

8. Gate valve according to claim 4 or 7, **characterized in that** the housing (4) has a first side wall (6), on which the feed opening (7) is arranged, and a second side wall (9), on which the discharge opening (10) is arranged, wherein the side walls (6, 9) are firmly connected to one another.

9. Gate valve according to any one of the preceding claims, **characterized by** an ejector element (40; 40a) for ejecting at least one sealing plate (34, 35; 34a, 35a; 34b, 35b) from the housing (4).

10. Gate valve according to any one of the preceding claims, **characterized by** at least one holding element (37) arranged in an interior space (22) of the housing (4) for holding a respective sealing plate (34, 35; 34a, 35a; 34b, 35b) along the longitudinal axis (5).

11. Gate valve according to any one of the preceding claims, **characterized in that** the sealing plates (34, 35; 34a; 35a) are designed separately from one another.

12. Gate valve according to claim 11, **characterized in that** the sealing plates (34, 35) each have an, in particular integrated, guide strip (38) for guiding the gate blade (28) along the longitudinal axis (5).

13. Gate valve according to any one of the preceding claims, **characterized by** a second displacement drive (46) for displacing the gate blade (28b) along a displacement direction (47) into a cleaning position, wherein the displacement direction (47) is oriented in particular transversely, in particular perpendicularly, to the longitudinal axis (5).

14. Gate valve according to any one of claims 1 to 10 and claim 13, **characterized in that** the sealing plates (34b, 35b) are arranged in an integrated manner in a sealing cassette (51).

15. Gate valve according to claim 13 or 14, **characterized by** a drainage opening (52) for the, in particular automatic, drainage of cleaning fluid, wherein the drainage opening (52) is arranged in particular at the sealing cassette (51).

## Revendications

1. Vanne d'arrêt pour une conduite de transport dans une installation de fabrication et/ou de traitement de matières en vrac comprenant
a. un boîtier (4) présentant un axe longitudinal (5) avec une ouverture d'alimentation (7) pour l'alimentation de matières en vrac dans le boîtier (4) et avec une ouverture d'évacuation (10) pour l'évacuation de matières en vrac hors du boîtier (4),
b. une lame de vanne (28 ; 28a ; 28b) qui peut être déplacée le long de l'axe longitudinal (5) entre une position d'écoulement, dans laquelle l'ouverture d'alimentation (7) est reliée à l'ouverture d'évacuation (10) pour un écoulement de matières en vrac le long d'une direction d'écoulement (11), et une position de fermeture, dans laquelle l'ouverture d'alimentation (7) est séparée de l'ouverture d'évacuation (10) par la lame de vanne (28 ; 28a ; 28b),
c. respectivement une plaque d'étanchéité (34, 35 ; 34a, 35a ; 34b, 35b) pour rendre étanche la lame de vanne (28 ; 28a ; 28b) par rapport à l'ouverture d'alimentation (7) et par rapport à l'ouverture d'évacuation (10),
d. un couvercle de boîtier (20) qui est fixé de manière amovible au boîtier (4) pour fermer une ouverture de boîtier (21),
**caractérisée en ce que** l'ouverture de boîtier (21) présente une normale à la surface qui est orientée transversalement à la direction d'écoulement (11) de la matière en vrac et **en ce que**, lorsque le couvercle de boîtier (20) est ouvert, la lame de vanne (28 ; 28a ; 28b) peut être déplacée au moins partiellement hors du boîtier (4).

2. Vanne d'arrêt selon la revendication 1, **caractérisée en ce que** la normale à la surface de l'ouverture du boîtier (21) est orientée perpendiculairement à la direction d'écoulement (11).

3. Vanne d'arrêt selon l'une quelconque des revendications précédentes, **caractérisée en ce que** la lame de vanne (28 ; 28a ; 28b) est réalisée en forme de plaque.

4. Vanne d'arrêt selon la revendication 3, **caractérisée en ce que** la lame de vanne (28) présente une épaisseur de plaque constante (d).

5. Vanne d'arrêt selon la revendication 4, **caractérisée en ce que** le boîtier (4) présente une première paroi latérale (6), sur laquelle est disposée l'ouverture d'alimentation (7), et une deuxième paroi latérale (9), sur laquelle est disposée l'ouverture d'évacuation (10), une distance (A, A') orientée le long de la direction d'écoulement (11) entre la première paroi latérale (6) et la deuxième paroi latérale (9) pouvant être fixée de manière variable au moyen d'une unité de réglage (14).

6. Vanne d'arrêt selon la revendication 5, **caractérisée par** au moins un élément d'étanchéité (8) disposé sur la première paroi latérale (6) et/ou sur la deuxième paroi latérale (9) pour rendre étanche l'ouverture d'alimentation (7) et/ou l'ouverture d'évacuation (10) pour la distance (A, A') réglée de manière variable.

7. Vanne d'arrêt selon la revendication 3, **caractérisée en ce que** la lame de vanne (28a ; 28b) présente une épaisseur de plaque (d) variable et est réalisée en particulier en forme de coin.

8. Vanne d'arrêt selon la revendication 4 ou 7, **caractérisée en ce que** le boîtier (4) présente une première paroi latérale (6), sur laquelle est disposée l'ouverture d'alimentation (7), et une deuxième paroi latérale (9), sur laquelle est disposée l'ouverture d'évacuation (10), les parois latérales (6, 9) étant solidaires l'une de l'autre.

9. Vanne d'arrêt selon l'une quelconque des revendications précédentes, **caractérisée par** un élément d'éjection (40 ; 40a) pour éjecter au moins une plaque d'étanchéité (34, 35 ; 34a, 35a ; 34b, 35b) du boîtier (4).

10. Vanne d'arrêt selon l'une quelconque des revendications précédentes, **caractérisée par** au moins un élément de retenue (37) disposé dans un espace intérieur (22) du boîtier (4) pour retenir respectivement une plaque d'étanchéité (34, 35 ; 34a, 35a ; 34b, 35b) le long de l'axe longitudinal (5).

11. Vanne d'arrêt selon l'une quelconque des revendications précédentes, **caractérisée en ce que** les plaques d'étanchéité (34, 35 ; 34a ; 35a) sont réalisées séparément les unes des autres.

12. Vanne d'arrêt selon la revendication 11, **caractérisée en ce que** les plaques d'étanchéité (34, 35) présentent chacune une baguette de guidage (38), en particulier intégrée, pour un guidage de la lame de vanne (28) le long de l'axe longitudinal (5).

13. Vanne d'arrêt selon l'une quelconque des revendications précédentes, **caractérisée par** un deuxième entraînement de déplacement (46) pour déplacer la lame de vanne (28b) le long d'une direction de déplacement (47) dans une position de nettoyage, la direction de déplacement (47) étant orientée en particulier transversalement, en particulier perpendiculairement, à l'axe longitudinal (5).

14. Vanne d'arrêt selon l'une quelconque des revendications 1 à 10 et la revendication 13, **caractérisée en ce que** les plaques d'étanchéité (34b, 35b) sont disposées de manière intégrée dans une cassette d'étanchéité (51).

15. Vanne d'arrêt selon la revendication 13 ou 14, **caractérisée par** une ouverture de drainage (52) pour l'écoulement, en particulier automatique, de liquide de nettoyage, l'ouverture de drainage (52) étant disposée en particulier sur la cassette d'étanchéité (51).
